# EUROPEAN PATENT APPLICATION

(11) **EP 1 752 594 A1**
(43) Date of publication of application: **14.02.2007**
(21) Application number: 05747111.2
(22) Date of filing: 29.04.2005
(51) Int. Cl.: E04C 1/42, E04C 1/40, E04C 2/54

(54) **MODULE FOR THE CONSTRUCTION OF FLOORS, PARTITION WALLS, ROOFS AND SIMILAR**

(30) Priority: 06.05.2004 ES 200401094 U
(71) Applicant: Ceraroca, S.L., 12200 Onda, Castellon (ES)
(72) Inventor: GARCÍA PRUÑONOSA, Bautista José, E-12200 Onda (Castellón) (ES); ROCA MESTRE, Manuel, E-12200 Onda (Castellón) (ES)
(74) Representative: Ungria Lopez, Javier
(86) International application number: PCT/ES2005/000233
(87) International publication number: WO 2005/108704

(57) **Abstract**

The invention relates to a module which is used to form facing based on translucent elements, such as to facilitate the construction of partition walls or facing having said optical feature. The invention is **characterised in that** the module comprises a central high-strength body and at least one flat part which is made from translucent material and which is fixed to a flat base of the central body using an adhesive. In addition, the side faces of the central body are equipped with channels in which rods are fitted in order to ensure correct assembly.

## Description

### OBJECT OF THE INVENTION

As stated in the title of this specification, the present invention relates to a module for the construction of floors, partition walls, roofs and similar, intended to form facings on the basis of elements of a translucent nature, such as to facilitate the construction of partition walls or facing having said optical feature.

The objective concerns certain modular parts, each of which possesses a resistant structure, in such a way that the stresses are borne not by the pairs of vitreous sheets of each module but instead by that new central structure.

### PRIOR ART OF THE INVENTION

The use of parts of a vitreous nature for facing and flooring is becoming more and more common, including those obtained from one or more glass compounds whose main characteristic is their permissivity to the passage of light.

So far, this type of part with flat structure has basically been used for facing surfaces or paving floors.

If it is wished to create a partition wall of glass or with translucent qualities, one usually resorts to the classical glass block, in other words, a glass block that is fully moulded.

This solution right now presents certain limitations of mechanical strength, aesthetics, cost and even of fitting.

### DESCRIPTION OF THE INVENTION

The module for construction constituting the inventive object of the present invention, is characterised in that it comprises a central body by way of a frame, where in at least one of its bases is fixed a flat part of translucent material, in such a way that this central body will be manufactured by means of a high mechanical strength structure, such as for example cement, fibrecement, clay, etc.

The translucent laminar parts are fixed to the central body via its two bases essentially by means of adhesive materials, though the means of joining could be defined by other systems.

The structure in the form of a frame demarcates a large central space which will permit the passage of light.

Although said central structure will preferably be wholly diaphanous, ribs could also be included in order to stiffen and/or create decorative effects, these ribs occupying part of that diaphanous central space demarcating the perimetric frame.

Another characteristic is that the central body incorporates in its exterior narrow side walls some channels for facilitating the use of reinforcing rods in collaboration with a mortar conventionally used in the joining of blocks, bricks, etc.

The mechanical loads and stresses will be borne by the central bodies thanks to the incorporation of the channels and reinforcing rods.

Moreover, these rods and channels facilitate the centring and location of the different modules during the assembly.

Below, in order to facilitate a better understanding of this specification and forming an integral part thereof, some figures are attached which represent the object of the invention.

### BRIEF DESCRIPTION OF THE DRAWINGS

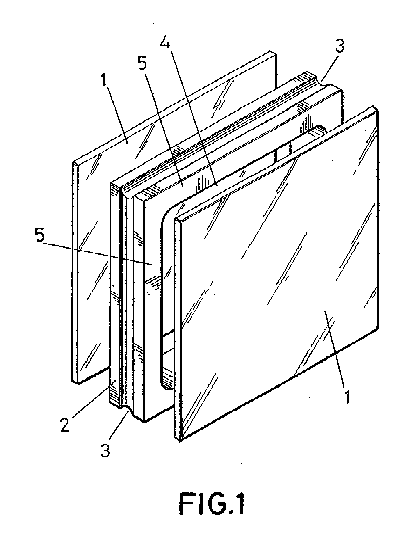

**Figure 1.-** Shows an exploded perspective view of the module for the construction of floors, partition walls, roofs and similar, forming the object of the invention.
Figure 2.- Shows a cross-section view of the module of the present invention.
Figure 3.- Shows a perspective view of a central body forming part of the module of the present invention.

### DESCRIPTION OF THE PREFERRED FORM OF EMBODIMENT

Considering the numbering adopted in the figures, the module for the construction of floors, partition walls, roofs and similar is defined starting from two flat parts 1 of translucent material based on formulations on the basis of vitreous materials, and a central structure 2 of high mechanical strength material such as cement, fibrecement, clay, etc., which presents one or more bases 5 for sticking the translucent parts using chemical or adhesive means 6.

Said central structure 2 will in principle adopt a form of a frame with the aim of providing a central opening as large as possible in order to permit the passage of light.

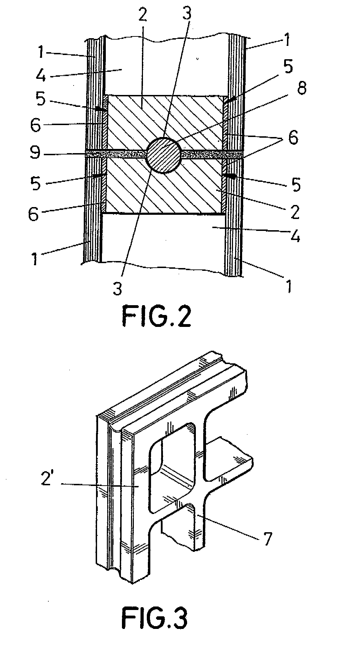

Although said central structure will preferably be wholly diaphanous, it could also include ribs 7 for stiffening and/or creating decorative effects, as shown more clearly in figure 3.

It will likewise include at least one perimetric recess 3 in its external side faces for facilitating the use of reinforcing rods 8 in collaboration with a mortar 9 conventionally used for the joining of blocks, bricks, etc., in construction.

This form of assembly considerably relieves the vitreous laminas or sheets 1 of their mechanical load stresses.

The possibility exists of introducing artificial illumination elements inside the module in order to create light-generating partitions and/or facings.

## Claims

1. **MODULE FOR THE CONSTRUCTION OF FLOORS, PARTITION WALLS, ROOFS AND SIMILAR,** essentially **characterised in that** it comprises a central high mechanical strength body with two flat bases and at least one flat part which is made from translucent material (1) and which is fixed to one of said flat bases of the central body using an adhesive; the narrow side faces of this central body being provided with longitudinal channels (3) in which fit some rods (8) for the reinforcing and centring of adjacent modules which are joined with the aid of a mortar material (9) or similar.

2. **MODULE FOR THE CONSTRUCTION OF FLOORS, PARTITION WALLS, ROOFS AND SIMILAR,** according to claim 1, **characterised in that** the central body comprises a structure in the form of a frame (2).

3. **MODULE FOR THE CONSTRUCTION OF FLOORS, PARTITION WALLS, ROOFS AND SIMILAR,** according to claim 1, **characterised in that** the central body (2') comprises a frame with ribs (7) occupying part of the space demarcated by the sections of that frame (2').
